# EUROPÄISCHE PATENTSCHRIFT

(11) **EP 2 570 251 B1**
(45) Veröffentlichungstag und Bekanntmachung des Hinweises auf die Patenterteilung: **30.10.2019**
(21) Anmeldenummer: 12184118.3
(22) Anmeldetag: 12.09.2012
(51) Int. Cl.: B29C 49/42, B29C 33/30, B29C 49/36, B29C 49/46, B29C 49/48

(54) **Blasmaschine mit demontierbaren Blasstationen und Verfahren zum Demontieren von Blasstationen**
Blowing machine with detachable blowing stations
Souffleuse avec stations de soufflage démontables

(30) Priorität: 13.09.2011 DE 102011053577
(43) Veröffentlichungstag der Anmeldung: 20.03.2013
(73) Patentinhaber: Krones AG, 93073 Neutraubling (DE)
(72) Erfinder: Geltinger, Florian, 93073 Neutraubling (DE); Handschuh, Eduard, 93073 Neutraubling (DE); Hausladen, Josef, 93073 Neutraubling (DE); Höllriegl, Thomas, 93073 Neutraubling (DE); Lappe, Ulrich, 93073 Neutraubling (DE); Neubauer, Michael, 93073 Neutraubling (DE); Philipp, Thomas, 93073 Neutraubling (DE); Söllner, Jürgen, 93073 Neutraubling (DE); Voth, Klaus, 93073 Neutraubling (DE)
(74) Vertreter: Bittner, Bernhard

(56) Entgegenhaltungen:
- EP-A1- 2 292 403
- EP-A2- 2 292 404
- EP-A2- 2 295 223
- WO-A1-2006/113811
- DE-A1-102008 038 141
- DE-A1-102009 041 160
- DE-U1- 20 015 590

## Beschreibung

Die vorliegende Erfindung bezieht sich auf eine Vorrichtung zum Umformen von Kunststoffvorformlingen zu Kunststoffbehältnissen. Derartige Vorrichtungen sind aus dem Stand der Technik bekannt. So beschreibt beispielsweise die WO 2010 020 529 A2 eine aseptische Blasmaschine. Diese Blasmaschine weist einen Reinraum auf, in dem die Blasstationen angeordnet sind. Der Offenbarungsgehalt der WO 2010 020 529 A2 wird hiermit durch Bezugnahme auch zum Offenbarungsgehalt der vorliegenden Anmeldung gemacht.

EP 2295223 A2 offenbart eine Magazinvorrichtung zur Aufbewahrung von Blasformen, in die eine Reinigungseinrichtung zum Reinigen der Blasformen integriert ist.

Eine Problematik bei insbesondere aseptischen Blasmaschinen besteht darin, dass beispielsweise zum Zwecke der Montage aufgrund der Reinräume diese Maschinen relativ unzugänglich sind.

Der vorliegenden Erfindung liegt daher die Aufgabe zugrunde, die Montagemöglichkeiten für derartige Vorrichtungen zum Umformen von Kunststoffvorformlingen zu Kunststoffbehältnissen zu verbessern. Diese Aufgabe wird erfindungsgemäß durch die Gegenstände der unabhängigen Ansprüche erreicht. Vorteilhafte Ausführungsformen und Weiterbildungen sind Gegenstand der abhängigen Ansprüche.

Eine erfindungsgemäße Vorrichtung zum Umformen von Kunststoffvorformlingen zu Kunststoffbehältnissen weist einen bewegbaren Träger auf, an dem eine Vielzahl von Blasstationen angeordnet ist, wobei diese Blasstationen jeweils Blasformträgerteile zum Halten von Blasformteilen aufweisen und wenigstens eines dieser Blasformträgerteile gegenüber dem anderen Blasformträgerteil zum Öffnen und Schließen der Blasform bewegbar ist. Weiterhin weisen die Blasstationen jeweils ein Tragelement zum Tragen wenigstens eines Blasformträgerteils auf. Weiterhin weist die Vorrichtung vorteilhaft einen Reinraum auf, innerhalb dessen die Kunststoffvorformlinge zu den Kunststoffbehältnissen expandierbar sind.

Erfindungsgemäß bilden die Blasformträgerteile mit dem Tragelement eine Einheit aus, die in ihrer Gesamtheit von dem Träger demontierbar ist. Unter einer Montage oder Demontage einer Einheit wird dabei insbesondere verstanden, dass die einzelnen Elemente bzw. Bauteile dieser Einheit während der Montage der Einheit in ihrer Gesamtheit nicht voneinander demontiert oder aneinander montiert werden und diese Elemente bevorzugt während der Montage ihre geometrische Anordnung zueinander beibehalten.

Es wird daher vorgeschlagen, dass die Blasstationen oder Blasstationen in ihrer Gesamtheit als Einheit ausgebildet werden, wobei diese Einheit von dem beweglichen Träger entfernbar ist. Vorteilhaft handelt es sich bei dem beweglichen Träger um einen drehbaren Träger und vorteilhaft um ein sogenanntes Blasrad. Dabei bilden vorteilhaft wenigstens die Formträgerteile mit ihrem Träger eine insgesamt demontierbare Einheit. Weiterhin ist es jedoch möglich, dass die Blasstationen weitere Elemente umfassen, welche ebenfalls gemeinsam mit den Formträgerteilen montierbar und demontierbar sind, wie beispielsweise Verriegelungsmechanismen zum Verriegeln der beiden Formträgerteile, Blasdüsen, Blasformteile, wie die Seitenteile der Blasform und auch die Bodenteile der Blasform oder dergleichen.

Vorteilhaft kann die demontierbare Einheit der Blasstation von den Medienverbindungen getrennt bzw. mit diesen wieder verbunden werden. Dabei ist es möglich, dass sich Leitungen wie Schläuche innerhalb bzw. außerhalb des Reinraums befinden, um die Medien aus dem Drehverteiler zu den jeweiligen Blasstationen zu befördern. Diese Schläuche können beispielsweise anhand von Kupplungssteckern oder Verschraubungen gelöst bzw. verbunden werden. Die Entkopplungsstellen befinden sich entweder direkt am Formträger, irgendwo im Reinraum oder auch außerhalb des Reinraums.

Bei einer vorteilhaften Ausführungsform bewegt der bewegbare Träger die Blasstationen in einer vorgegebenen Transportebene und die Einheit kann zum Zwecke der Montage an einem Träger oder der Demontage von dem Träger in einer senkrecht zu dieser Ebene stehenden Richtung bewegt werden.

So ist es beispielsweise möglich, dass der Träger Aussparungen aufweist, die vorteilhaft kreisrund oder oval, um den Übergangsbereich optimal abdichten zu können, oder aber auch rechteckig ausgebildet sein können. Weiterhin kann man durch Ausnutzung der Aussparungen möglich, die Blasstationen von unten oder oben einsetzen. Dabei ist es möglich, dass sich die einzelnen Komponenten der Blasstation oder Blasstation auf einer Platte befinden, die durch diese Aussparung des Trägers bzw. Blasrades (zumindest teilweise) hindurch passt. Auf diese Weise können die Blasstationen leicht vormontiert und anschließend komplett in den Träger eingesetzt werden. Zu Wartungszwecken kann die gesamte Blasstation nach oben oder unten und bevorzugt nach unten aus dem Träger abgesenkt werden. Dabei ist es auch möglich, dass die Blasstation auf einem Hilfsgestell abgelegt wird, wobei dieses Hilfsgestell vorteilhafterweise mit Rollen ausgestattet ist, um einen schnellen und einfachen Transport der Station zu einem Wartungsplatz zu ermöglichen.

Es wird daher vorgeschlagen, dass die Entfernung der Blasstation in einer senkrechten Richtung bzw. einer Richtung erfolgt, die senkrecht zu dem Bewegungspfad der Blasstationen ist, wobei in besonders günstiger Weise ein Austausch der Blasstationen ermöglicht wird, ohne hierzu in Umfangsrichtung angeordnete Wandungen des Trägers oder auch Begrenzungswandungen eines Reinraums zu entfernen.

Alternativ ist es aber auch möglich, die demontierbare Einheit derart zu gestalten, dass der gesamte Reinraum aus einzelnen Segmenten zusammengesetzt wird. Das heißt, die Blasstation wird jeweils mit einem Teilbereich der Deckelwand, der Seitenwand, der Bodenwand sowie der später festehenden Wandung vormontiert. Anschließend werden die einzelnen Segmente auf dem Blasrad miteinander verbunden. Zur Verbindung der jeweiligen Segmente werden jeweils Dichtungseinrichtungen angebracht.

Bei einer weiteren vorteilhaften Ausführungsform weist wenigstens eine Blasstation und bevorzugt jede Blasstation einen lösbar an dem Träger angeordneten Haltekörper auf, an dem die Einheit angeordnet ist. Weiterhin ist es auch möglich, den Haltekörper nicht mit der Einheit der Blasstation zu verbinden, sondern den Haltekörper einzeln abzunehmen. Dabei kann es sich beispielsweise um ein plattenartiges Element handeln, welches in die oben erwähnten Aussparungen eingesetzt ist. Dabei ist es möglich, dass das plattenartige Element beispielsweise in die Aussparung eingedreht ist. Es wäre jedoch auch möglich, dass das plattenartige Element in anderer Weise an der Öffnung arretiert wird. Damit weist vorteilhaft der Träger eine Vielzahl von Öffnungen auf, durch welche hindurch die Blasstationen einsetzbar sind. Vorteilhaft ist das Trageelement an dem Haltekörper angeordnet und kann so mit diesem von dem Träger entfernt werden. Bei der Ausgestaltung bildet auch der Haltekörper einen Teil der Einheit, die in ihrer Gesamtheit von dem Träger entfernbar ist. Es wäre auch denkbar, dass zwei Haltekörper vorgesehen sind, welche die Blasstation zwischen sich aufnehmen.

Vorteilhaft ist in wenigstens einem Bereich zwischen dem genannten Haltekörper und dem Träger eine Dichtungseinrichtung vorgesehen. Auf diese Weise kann die Aufrechterhaltung eines Reinraums gewährleistet werden, obwohl der besagte Haltekörper von dem Träger lösbar ist. Weiterhin sind auch vorteilhaft zwischen allen Teilen, die durch die Reinraumwand hindurch gehen und der Reinraumwand Dichtungseinrichtungen angebracht.

Bei einer weiteren vorteilhaften Ausführungsform weist der Träger eine umlaufende Ausnehmung auf, in der die Blasstationen angeordnet sind. So kann beispielsweise der Träger an seinem Außenumfang ein C-förmiges Profil aufweisen, wobei in der hierdurch gebildeten Ausnehmung die einzelnen Blasstationen angeordnet sind. Dies wird unter Bezugnahme auf die Figuren genauer erläutert.

Dabei ist es möglich, dass der Reinraum ringförmig ausgebildet ist und im Wesentlichen die Kunststoffvorformlinge bzw. die einzelnen Blasstationen umgibt. Dabei ist es besonders bevorzugt möglich, dass sich die Formträgerteile und damit auch die Blasformteile innerhalb dieses Reinraums bewegen. Weiterhin ist es möglich, dass Antriebe zum Bewegen der Formträgerteile beispielsweise außerhalb dieses Reinraums angeordnet sind. Die aus dem Stand der Technik bekannten Blasstationen sind für aseptische Anwendungen oftmals ungeeignet. Durch eine Vielzahl von Lagerstellen, Verschraubungen, Hinterschneidungen, Überlappungen und dergleichen ist es oftmals schwierig, einen Reinraum aufrecht zu erhalten. Jede der oben genannten Stellen birgt die Gefahr einer Verkeimung. Aus diesem Grunde ist auch eine effiziente Sterilisation vor Produktionsbeginn nicht ohne weiteres möglich. Hier wird erfindungsgemäß vorgeschlagen, sowohl den Träger als auch die darin befindlichen Blasstationen montage- und wartungsfreundlich zu gestalten. Vorteilhaft wird wenigstens eine Begrenzung des Reinraums durch einen Bereich des Trägers ausgebildet, beispielsweise durch das genannte C-förmige Profil. Weiterhin ist es vorteilhaft möglich, dass die Blasstationen an einer Begrenzungswand des Reinraums angeordnet sind.

Vorteilhaft sind die Öffnungen, durch welche hindurch die Blasformen in den Träger einführbar sind, ebenfalls in einer Begrenzungswandung des Reinraums angeordnet.

Bei einer weiteren vorteilhaften Ausführungsform ist ein Blasformträgerteil starr gegenüber dem Träger angeordnet und das andere Blasformträgerteil ist beweglich gegenüber dem Träger angeordnet. Dabei dient vorteilhaft der Träger, das heißt das Blasrad, als Aufnahmeelement für die Blasstationen. Eines der beiden Blasformträgerteile wird dabei beweglich an bzw. in dem Blasrad angeordnet. Vorteilhaft befinden sich Lagerungselemente, die zur Lagerung einer Bewegung des Formträgerteils dienen, außerhalb des Reinraums. Sie sind dabei vorteilhaft durch eine Abdichtung gegenüber Reinigungs- und Sterilisationsmedien geschützt, was sich wiederum positiv auf die Lebensdauer auswirkt.

Zum anderen stellen diese Bauteile bei der Platzierung außerhalb des Reinraums keine Kontaminationsgefahr für die Reinraumatmosphäre dar. Das unbewegliche Formträgerteil benötigt demgegenüber keine Lagerstellen. Dieses Teil kann starr mit dem Blasrad, wie beispielsweise dem oben erwähnten Träger, verbunden sein. Dabei ist es möglich, dass beispielsweise fest in das Blasrad eingebrachte, wie beispielsweise verschweißte Elemente, als Aufnahme für die unbewegliche Formträgerseite dienen.

Bei einer vorteilhaften Ausführungsform ist es denkbar, zwei Aussparungen, also eine oben und eine unten, vorzusehen, an denen die Befestigung des starren Blasformträgerteils lösbar oder unlösbar durchgeführt wird. Somit kann die Einheit inklusive der beiden Haltekörper demontiert werden. Es wird darauf hingewiesen, dass diese Ausführungsform mit den fest an dem Blasrad angeordneten Blasformträgerteilen auch unabhängig von der oben erwähnten Erfindung denkbar ist.

Daneben wäre es auch möglich, dass der unbewegliche Formträger zum Beispiel über Bolzen oder dergleichen mit dem Blasrad verbunden sein kann. Auch diese Bolzen können dabei an dem oben erwähnten Haltekörper angeordnet sein und damit mit diesem Haltekörper von dem Träger entfernt werden. Vorteilhaft sind die Formträgerteile teilweise innerhalb des Reinraums aufgehängt, das heißt sie weisen möglichst wenige Lager- und Kontaktstellen mit dem Innenraum des Reinraums auf.

Bei einer weiteren vorteilhaften Ausführungsform ist das starr gegenüber dem Träger angeordnete Blasformträgerteil schräg gegenüber einer radialen Richtung des Trägers angeordnet, das heißt, eine Trennebene zwischen den beiden Blasformhälften in einem geschlossenen Zustand der Blasform ist schräg gegenüber der radialen Richtung. Vorteilhaft ist dabei ein Neigungswinkel zwischen der besagten Ebene und der radialen Richtung zwischen 10° und 50°, bevorzugt zwischen 30° und 50°. Vorteilhaft ist dabei das Blasformträgerteil derart starr an dem Träger angeordnet, dass die an dem Blasformträger angeordnete Blasform bzw. das Blasformteil schräg nach außen weist. Vorteilhaft ist wenigstens ein Blasformträgerteil schwenkbar an dem Träger angeordnet, wobei besonders vorteilhaft eine Schwenkachse sich in der Richtung erstreckt, in der die Blasform von dem Träger abnehmbar ist.

Bei einer weiteren vorteilhaften Ausführungsform ist das starr an dem Träger angeordnete Blasformträgerteil zumindest teilweise radial innerhalb des beweglich angeordneten Blasformträgerteils angeordnet. Dies bedeutet, dass in einem geschlossenen Zustand der Blasform das starr angeordnete Blasformteil zumindest teilweise radial innerhalb des beweglichen Blasformträgerteils und des daran angeordneten Blasformteils angeordnet ist.

Bei einer weiteren vorteilhaften Ausführungsform weist wenigstens eine Wandung des Trägers eine Öffnung auf, durch welche eine Blasstation hindurchführbar ist. Vorteilhaft handelt es sich dabei um eine abgeschlossene Öffnung, das heißt beispielsweise eine kreisförmige oder polygonale Öffnung.

Vorteilhaft ist die besagte Öffnung parallel zur Transportebene, in der die einzelnen Blasstationen transportiert werden.

Die vorliegende Erfindung ist weiterhin auf ein Verfahren zum Demontieren oder Montieren einer Vorrichtung zum Umformen von Kunststoffvorformlingen zu Kunststoffbehältnissen gerichtet. Dabei weist die Vorrichtung einen bewegbaren Träger auf, an dem eine Vielzahl von Blasstationen zum Umformen von Kunststoffvorformlingen zu Kunststoffbehältnissen angeordnet ist. Dabei weisen die Blasstationen jeweils ein erstes Blasformträgerteil und ein zweites Blasformträgerteil auf. Wenigstens eines dieser Blasformträgerteile wird gegenüber dem anderen Blasformträgerteil zum Öffnen und Schließen einer Blasform während eines Arbeitsbetriebes der Vorrichtung bewegt. Erfindungsgemäß wird zur Demontage oder Montage der Vorrichtung die gesamte Blasstation von dem Träger entfernt oder an diesem angeordnet. Auch zur Montage wird die gesamte Blasstation an dem Träger angeordnet bzw. montiert. Vorteilhaft wird zum Montieren und/oder Demontieren der Vorrichtung die gesamte Blasstation in einer Richtung von dem Träger entfernt, welche senkrecht zu einem Transportpfad der Blasstationen während eines Arbeitsbetriebes der Vorrichtung steht.

Bevorzugt weist die Vorrichtung in einem Arbeitsbetrieb einen Reinraum auf, innerhalb dessen in einem Arbeitsbetrieb der Vorrichtung die Kunststoffvorformlinge zu den Kunststoffbehältnissen expandiert werden. Die einzelnen Blasstationen bewegen sich dabei bevorzugt innerhalb dieses Reinraums.

Weitere Vorteile und Ausführungsformen ergeben sich aus den beigefügten Zeichnungen:

Darin zeigen:
- Fig. 1: eine schematische Darstellung einer Anlage zum Herstellen von Kunststoffbehältnissen;
- Fig. 2: eine Ansicht eines Reinraums im Bereich einer Blasstation;
- Fig. 3: eine Darstellung eines Trägers mit daran angeordneten Umformungsstationen;
- Fig. 4: eine Schnittdarstellung eines Trägers mit einer teilweisen Darstellung einer daran angeordneten Blasstation;
- Fig. 5: eine schematische Draufsicht auf eine Vielzahl von Blasstationen;
- Fig. 6: eine teilweise Schnittdarstellung einer erfindungsgemäßen Vorrichtung;
- Fig. 7: eine teilweise Schnittdarstellung zur Veranschaulichung der erfindungsgemäßen Vorrichtung;
- Fig. 8a-8c: drei Darstellungen zur Veranschaulichung einer erfindungsgemäßen Vorrichtung;
- Fig. 9: eine weitere Darstellung einer erfindungsgemäßen Vorrichtung;
- Fig. 10: eine Schnittdarstellung einer erfindungsgemäßen Vorrichtung;
- Fig. 11: eine weitere teilweise Darstellung einer erfindungsgemäßen Vorrichtung;
- Fig. 12: eine weitere Ausführungsform einer Vorrichtung zum Umformen von Kunststoffvorformlingen; und
- Fig. 13: eine weitere Ausführungsform einer Vorrichtung zum Umformen von Kunststoffvorformlingen;

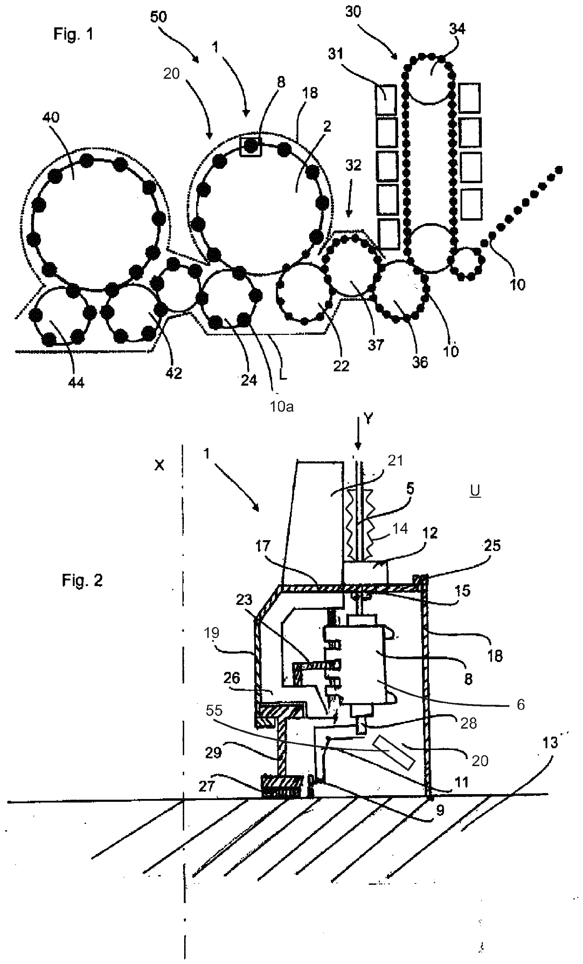

Figur 1 zeigt eine schematische Darstellung einer Anlage zum Herstellen von Kunststoffbehältnissen nach dem Stand der Technik. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische Strahlung möglich. Insbesondere wird in diesem Bereich eine Innensterilisation der Vorformlinge durchgeführt.

Das Bezugszeichen 20 bezeichnet in seiner Gesamtheit einen Reinraum, dessen Außenbegrenzungen hier durch die punktierte Linie L angedeutet sind. In einer weiteren bevorzugten Ausführungsform ist der Reinraum 20 nicht nur im Bereich des Transportrads 2 und Befüllungseinrichtung 40 angeordnet, sondern beginnt möglicherweise schon im Bereich der Heizeinrichtung 30, der Sterilisationseinrichtung 32, der Kunststoffvorformlingzuführung und/oder der Kunststoffvorformlingherstellung. Man erkennt, dass dieser Reinraum 20 in dem Bereich der Sterilisationseinheit 32 beginnt. In diesem Bereich können Schleuseneinrichtungen vorgesehen sein, um die Kunststoffvorformlinge in den Reinraum 20 einzuführen, ohne dass dabei zu viel Gas innerhalb des Reinraums strömt und so verloren geht.

Der Reinraum ist, wie durch die gestrichelte Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen bzw. Blasstationen 8 angeordnet ist, wobei hier lediglich einer dieser Blasstationen 8 dargestellt ist. Mit diesen Blasstationen 8 werden die Kunststoffvorformlinge 10 zu Behältnissen 10a expandiert. Obwohl hier nicht detailliert gezeigt, befindet sich nicht der gesamte Bereich des Transporteinrichtung 2 innerhalb des Reinraums 20, sondern der Reinraum 20 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 20 von der Umformungsvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 10a von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 6 angeordnet sind, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 20 im Bereich der Vorrichtung 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 nach dem Stand der Technik im Bereich einer Blasstation 8. Eine Vielzahl derartiger Blasstationen 8 wird mit einer Transporteinrichtung 2 bzw. einem Träger drehend um eine Achse X bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 19 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 16 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 6 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 11 unterhalb der einzelnen Blasstationen 8 aus dem Reinraum 20 herauszuführen.

Die Transporteinrichtung 2 kann noch weitere Elemente aufweisen, welche oberhalb des Reinraums 20 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 21 bezieht sich auf eine weitere Halterung für diesen Schlitten 12 der Reckstange 5.

Man erkennt, dass bestimmte Bereiche der Reckstange während des Blasvorgangs sowohl außerhalb des Reinraums 20 als auch innerhalb des Reinraums 20 sind. Zu diesem Zweck ist es möglich, außerhalb des Reinraums 20 bzw. oberhalb des Schlittens 12 eine Schutzeinrichtung wie einen Faltenbalg 14 vorzusehen, der die Reckstange 5 umgibt, so dass kein Bereich der Reckstange 5 unmittelbar mit der Außenumgebung in Berührung kommt. Das Bezugszeichen U kennzeichnet die (unsterile) Umgebung des Reinraums 20. Das Bezugszeichen 28 kennzeichnet einen Träger zum Tragen einer Bodenform, welche ebenfalls einen Bestandteil der Blasform ausbildet. Dieser Träger ist dabei ebenfalls in der Richtung Y bewegbar.

Das Bezugszeichen 55 bezieht sich auf eine Sterilisationseinrichtung, welche hier bevorzugt im Inneren des Reinraums 20 angeordnet ist und zum Sterilisieren der einzelnen Blasstationen bzw. Bestandteilen dieser Blasstationen 8 dient. Diese Sterilisationseinrichtung 55 kann dabei die Blasstationen 8 beispielsweise mit
Wasserstoffperoxid oder einem anderen Sterilisationsmittel beaufschlagen. Dabei kann die Sterilisationseinrichtung 55 stationär angeordnet sein und die Blasstationen können sich gegenüber dieser Sterilisationseinrichtung 55 bewegen. Diese Sterilisationseinrichtung bzw. Beaufschlagungseinrichtung 55 kann sich am Transportrad 2 oder an der stehenden Wandung 18 befinden oder generell stationär angeordnet sein und aus Düsen oder ähnlichem bestehen. Zudem ist es vorteilhaft, Sterilluft zum Sterilisieren des Reinraums 20 über das Lüftungssystem in den Reinraum 20 einzubringen.

Die (nicht gezeigten) Blasformen sind innerhalb der Blasformträger 6 angeordnet. Genauer können dabei zwei Blasformträgerteile angeordnet sein, die gegenüber einander schwenkbar sind und jeweils ein Blasformteil halten. Durch diesen Schwenkvorgang können die Blasformen zum Einbringen von Kunststoffvorformlingen und zum Entnehmen fertig geblasener Behältnisse geöffnet werden. Diese Blasformträger und Blasformen sind dabei ebenfalls innerhalb des Reinraums angeordnet.

Es wäre jedoch auch (anders als in Fig. 2 gezeigt) möglich und bevorzugt, dass die Transporteinrichtung 2 bzw. der Träger einen C-förmigen Außenumfang aufweist, der auch teilweise die Außenwandungen des Reinraums ausbildet. Damit dreht sich hier diese C - förmige Reinraumwand mit der Transporteinrichtung 2 d.h. dem Blasrad. Bei dieser Ausführungsform ist die untere Begrenzung des Reinraums von dem Boden 13 beabstandet und bewegt sich relativ zu dem Boden. Auf diese Weise kann der Reinraum noch kleiner gestaltet werden als in Fig.2 gezeigt. Eine Abdichtung dieses C- förmigen Profils der Transporteinrichtung, welches hier sowohl eine Innenwandung als auch eine untere und obere Abdeckung des Reinraums ausbildet, findet hier bevorzugt nur gegenüber der Außenwandung des Reinraums statt. Diese Außenwandung ist dabei vorteilhaft stationär angeordnet.

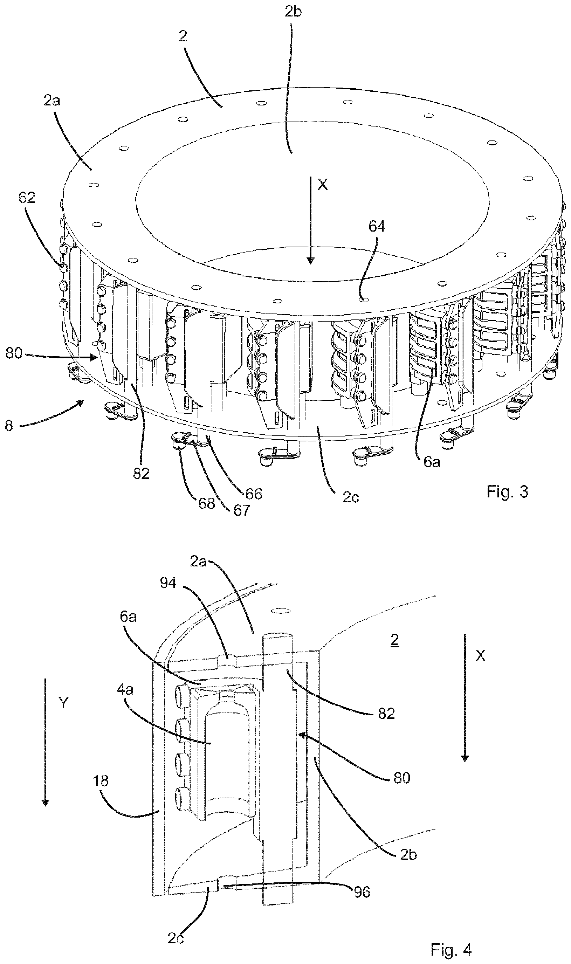

Figur 3 zeigt eine Darstellung eines Trägers 2, an dem eine Vielzahl von Blasstationen 8 angeordnet ist. Dabei weist der Träger 2 eine Deckelwand 2a, eine Seitenwand 2b sowie eine Bodenwand 2c auf, die bevorzugt einteilig miteinander ausgebildet sind. Diese drei Wände 2a-2c sind dabei C-förmig ausgebildet, wobei die einzelnen Blasstationen in Umfangsrichtung des Trägers in diesem C-förmigen Querschnitt angeordnet sind. Die einzelnen Blasstationen 8 weisen dabei jeweils ein erstes Blasformträgerteil 6a auf, welches mittels einer Schwenkwelle 82, welche hier parallel zu der Richtung X verläuft, schwenkbar angeordnet ist. Das Bezugszeichen 66 bezieht sich auf eine Verlängerung dieser Schwenkwelle nach außen, das heißt außerhalb des Reinraums. In diesem Abschnitt ist ein Hebel 67 angeordnet sowie eine Kurvenrolle 68 angeordnet. Mittels dieser Kurvenrolle 68 kann eine Schwenkung der Schwenkwelle 82 und daher auch eine Schwenkung des Blasformträgerteils 6a erreicht werden. Das Bezugszeichen 62 kennzeichnet grob schematisch einen Verriegelungsmechanismus, mit dem die beiden Blasformträgerteile miteinander während des Expansionsprozesses verriegelt werden können.

Die Schwenkwelle 82 ist hier gleichzeitig das Tragelement 82, welches zum Tragen des Blasformträgers 6a dient. Weiterhin ist es auch möglich, dass an der Schwenkwelle auch das zweite Blasformträgerteil (nicht gezeigt) angelenkt ist bzw. von diesem getragen wird. Das Bezugszeichen 80 kennzeichnet die von dem Träger abnehmbare Einheit, welche zumindest das Blasformträgerteil 6a und das Tragelement 82 umfasst, darüber hinaus jedoch noch weitere Elemente wie die Blasformteile, ein Bodenteil der Blasform und dergleichen umfassen kann.

Figur 4 zeigt eine Schnittdarstellung einer entsprechenden Vorrichtung. Hier ist die Schwenkwelle 82 dargestellt, die zum Schwenken des Blasformträgerteils 6a dient. An dem Blasformträgerteil ist ein Blasformteil 4a angeordnet. Zwischen diesem Blasformträgerteil 6a und dem Blasformteil 4a kann ein (nicht gezeigtes) Druckkissen angeordnet sein, welches dazu dient, um im Arbeitsbetrieb das Blasformteil 4a auf ein entsprechendes weiteres Blasformteil 4b (nicht gezeigt) zuzubewegen, bzw. zuzubelasten.

Der Reinraum 20 wird hier durch die Wandung 18 sowie die drei Wände 2a, 2b und 2c des Trägers 2 begrenzt. Die Schwenkwelle 82 erstreckt sich durch eine Öffnung, die hier in den Wänden 2a und 2c angeordnet ist. Die Bezugszeichen 94 und 96 beziehen sich jeweils auf Öffnungen in den Wänden 2a und 2c, über welche im Arbeitsbetrieb in der Richtung Y bewegliche Elemente mit den Blasformen 4a, 4b zusammenwirken können. So kann beispielsweise über die Öffnung 94 an einem Träger eine Beaufschlagungseinrichtung wie eine Blasdüse angeordnet sein, über welche der Kunststoffvorformling mit Druckluft beaufschlagt wird. Auch kann über die Öffnung 94 der Blasstation eine Reckstange zum Dehnen der Kunststoffvorformlinge zugeführt werden.

Durch die Öffnung 96 kann ein weiterer Träger geführt werden, der beispielsweise ein Bodenteil der Blasform (nicht gezeigt) trägt und ebenfalls zum Schließen der Blasform dieses Bodenteil hier nach oben an das Blasformteil 4a heranbewegt.

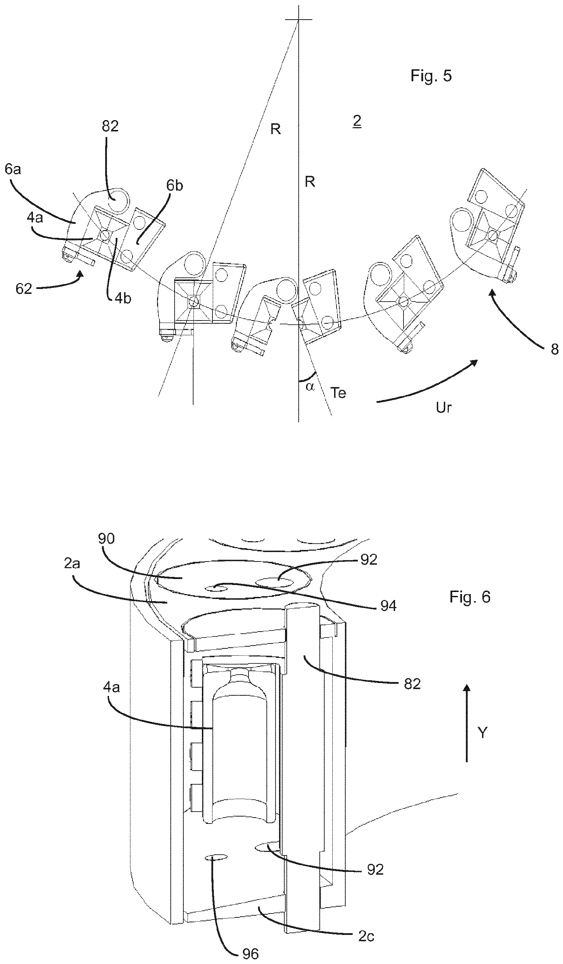

Figur 5 zeigt eine schematische Darstellung einer erfindungsgemäßen Vorrichtung. Bei dieser Ausführungsform ist ein Blasformträgerteil 6b starr gegenüber dem Träger 2 angeordnet und an diesem Blasformträgerteil 6b ist das Blasformteil 4b angeordnet. Das erste Blasformträgerteil 6a ist demgegenüber mittels der Schwenkwelle 82 schwenkbar angeordnet, um auf diese Weise die Blasform zu öffnen und zu schließen. Auch ist hier wieder schematisch ein Teil des Verriegelungsmechanismus 62 dargestellt.

Man erkennt, dass eine Trennebene Te der beiden Blasformteile 4a, 4b hier unter einem Winkel α bezüglich einer radialen Richtung R des Trägers angeordnet ist. Die Bewegungsrichtung der Blasstationen 8 in einem Arbeitsbetrieb der Vorrichtung ist durch das Bezugszeichen UR gekennzeichnet.

Figur 6 zeigt eine weitere Darstellung zur Veranschaulichung der erfindungsgemäßen Vorrichtung. Hier ist auch ein Haltekörper 90 vorgesehen, an dem die einzelnen Blasstationen angeordnet sind. Dieser Haltekörper 90 weist dabei eine Öffnung 92 auf, durch welche sich ein Abschnitt der Schwenkwelle 82 erstreckt. Dieser Haltekörper 90 ist dabei von dem Träger 2 abnehmbar. Nach Abnahme des Haltekörpers kann hier in ihrer Gesamtheit mit 8 bezeichnete Blasstation nach oben von dem Träger abgenommen werden. Damit kann hier die Blasstation 8 durch Bewegung entlang des Pfeils Y von dem Träger entfernt werden. Die Schwenkwelle 82 ist gegenüber der Wandung 2c schwenkbar gelagert und vorteilhaft auch mittels (nicht gezeigten) Lagereinrichtungen abgestützt. Weiterhin ist es möglich, dass eine (nicht gezeigte) Dichtung vorgesehen ist, um die Bewegung der Schwenkwelle 82 gegenüber dem Träger 2 abzudichten.

Vorteilhaft ist eine Vorrichtung vorgesehen, die beispielsweise auch an der Umformungsanordnung angeordnet sein kann, und welche die kompletten Blasstationen 8 einschließlich des Haltekörpers bzw. der Platte 90 nach oben hebt. Dabei kann eine derartige Vorrichtung die Blasstation auch auf ein Transportgestell absenken.

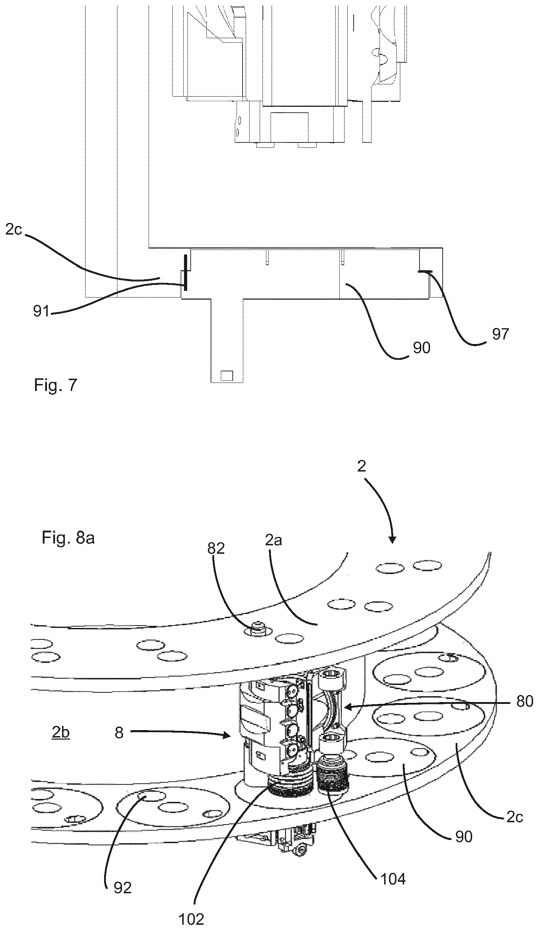

Hierzu wären unterschiedliche Vorgehensweisen denkbar. So kann beispielsweise eine Lifteinrichtung die Blasstation beispielsweise über Spindeln nach oben heben. Auch wäre eine hydraulische Betätigung zum Anheben der Blasstation denkbar. Alternativ ist jegliche pneumatische, elektromagnetische, elektrische oder aber manuelle Vorrichtung, wie z.B. eine Kurbel oder ein Hebelmechanismus zur Absenkung bzw. Anhebung der Blasstation denkbar. Figur 7 zeigt eine Detaildarstellung einer erfindungsgemäßen Vorrichtung. Hier ist wieder der Haltekörper 90 dargestellt, der beispielsweise mittels Schraubverbindungen 91 (nur schematisch dargestellt) an dem Träger 2 bzw. dem Bodenteil 2a des Trägers 2 befestigt ist. Das Bezugszeichen 97 kennzeichnet, eine Dichtungseinrichtung, welche zum Abdichten des Haltekörpers bzw. der Platte 90 gegenüber dem Träger 2 genauer der Wand 2c dient. Bei dieser Dichtungseinrichtung könnte es sich beispielsweise um einen O-Ring oder dergleichen handeln. Eine entsprechend ausgestaltete Platte 90 könnte alternativ oder zusätzlich auch in der oberen Wand 2a vorgesehen sein.

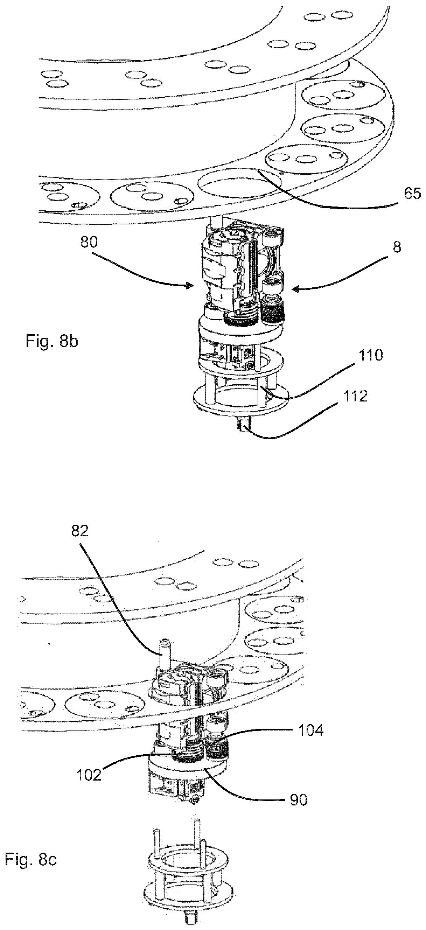

Die Figuren 8a-8c veranschaulichen die Demontage (und umgekehrt auch die Montage) einer Blasstation 8. Die Blasstation 8 kann von ihrer Entnahmestation (vgl. Fig. 8b) nach oben gehoben werden und anschließend mit dem Träger 2 verschraubt werden. Nachdem dies geschehen ist, kann die Hubeinrichtung bzw. der Lift entfernt werden und das Blasrad, das heißt der Träger 2 kann zur nächsten Station weiter drehen, die dann oben ebenfalls aus- oder eingebaut werden kann. In der in Figur 8a gezeigten Situation ist die Blasstation bereits an dem Träger montiert. Die Bezugszeichen 102 und 104 beziehen sich auf Dichtungseinrichtungen wie Faltenbälge, mit denen die Hubbewegungen beispielsweise eines Bodenteils abgedeckt werden kann oder auch die Drehbewegung eines (hier nicht gezeigten) Verriegelungsmechanismus.

Das Bezugszeichen 110 in Figur 8b zeigt eine Trägereinrichtung, die beispielsweise auch auf Rollen 112 angeordnet sein kann. Bei der in Figur 8c gezeigten Situation wird die Blasstation 8 gerade durch die Öffnung 65 (vgl. Figur 8b) geschoben, um entweder an den Träger 2 montiert oder von diesem entfernt zu werden. Bei dieser Vorgehensweise wird die Platte 90, bzw. der Haltekörper von unten an den Träger und damit an den Reinraum geführt und mithilfe von Schrauben an diesem befestigt. Daneben ist eine Dichtungseinrichtung vorgesehen, um den später entstehenden Reinraum nach außen abzudichten.

Auch in Fig. 8a und 8b bezieht sich das Bezugszeichen 80 wieder auf die von dem Träger 2 abnehmbare Einheit. Bei dieser Einheit handelt es sich hier im Wesentlichen um die gesamte Blasstation mit beiden Blasformträgerteilen, beiden Blasformteilen sowie auch einem Bodenteil der Blasform. Bevorzugt handelt es sich bei der Einheit 80 um die gesamte Blasstation mit allen zugehörigen Komponenten, die insbesondere zum Öffnen und Schließen der Blasform benötigt werden.

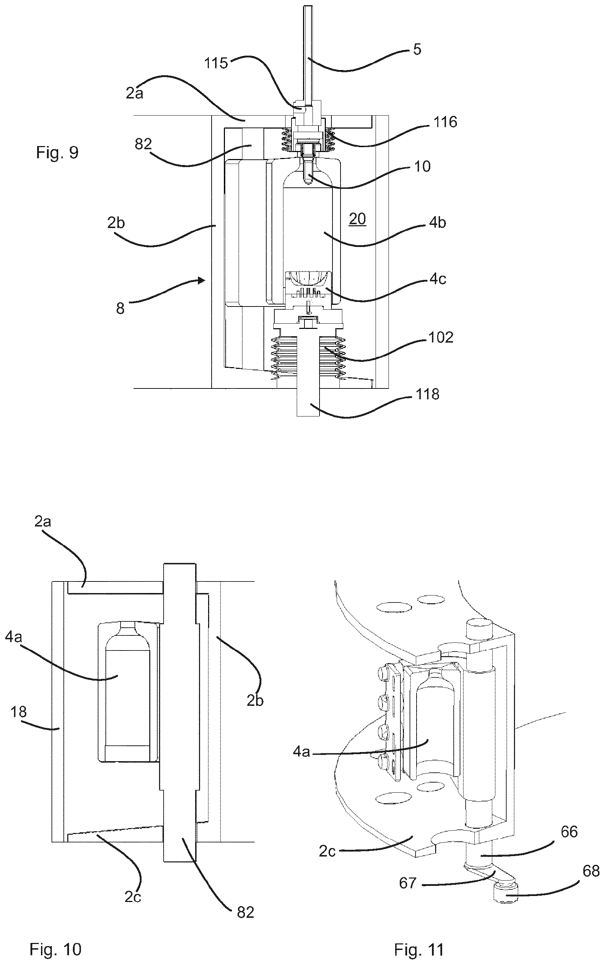

Figur 9 zeigt eine Schnittdarstellung einer erfindungsgemäßen Blasstation 8. Hier ist wiederum ein Blasformteil 4b gezeigt, innerhalb dessen der Kunststoffvorformling 10 zu dem Kunststoffbehältnis expandiert wird. Auch ist die Reckstange 5 gezeigt sowie ein Kanal 115, über den von außen her ein Medium wie beispielsweise Sterilluft zum Expandieren des

Kunststoffvorformlings 10 zugeführt wird. Das Bezugszeichen 4c kennzeichnet ein Bodenteil, welches die Blasformen in ihrer Gesamtheit auch von unten her abschließt. An einem Träger 118 ist das Bodenteil angeordnet und kann so an die Blasform herangeführt werden. Hier ist auch wieder die Dichtungseinrichtung 102 dargestellt, bei der es sich hier um einen Faltenbalg handelt. Auf diese Weise ist es auch möglich, Antriebseinrichtungen für den Träger 118 außerhalb des Reinraums 20 anzuordnen. Das Bezugszeichen 116 kennzeichnet eine weitere Dichtungseinrichtung, welche hier ebenfalls als Faltenbalg ausgebildet ist und welche zur Abdichtung der Bewegung der Beaufschlagungseinrichtung bzw. Blasdüse dient.

Figur 10 zeigt eine weitere Ausführungsformt, wobei hier wiederum die Schwenkwelle 82 mit einem daran angeordneten Blasformteil 4a zu sehen ist.

Bei der in Figur 11 gezeigten Darstellung erkennt man ebenfalls die Schwenkwelle 82 sowie die Hebelanordnung 66, 67, 68 mit der das Blasformteil 4a geschwenkt wird.

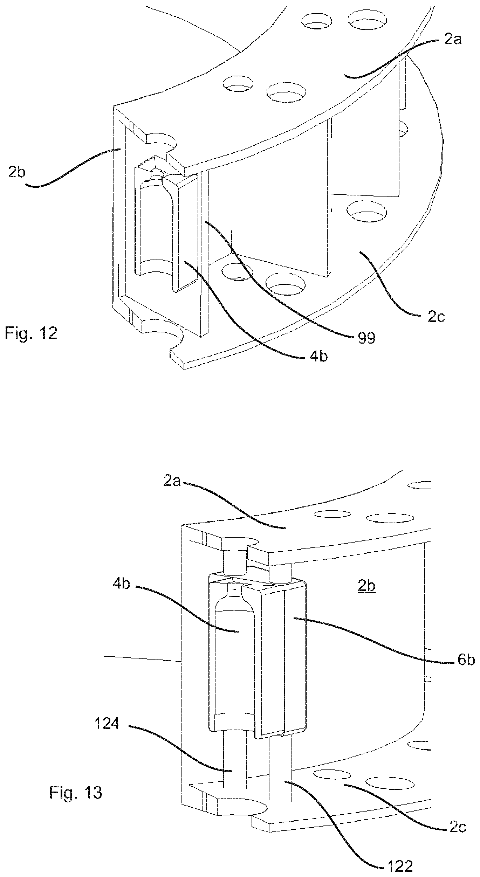

Figur 12 zeigt eine weitere Ausführungsform einer Vorrichtung zum Umformen von Kunststoffvorformlingen zu Kunststoffbehältnissen. Bei dieser Ausführungsform ist ein Blasformteil 4b - bevorzugt fest bzw. starr - an einer Halteeinrichtung 99 angeordnet. Diese Halteeinrichtung kann dabei beispielsweise mit dem Träger 2 verschweißt sein oder sogar einteilig mit diesem ausgebildet sein. Allerdings wäre es auch denkbar, dass die Halteeinrichtung 99 fest an dem (nicht gezeigten) Haltekörper 90 (vgl. Fig. 8c) angeordnet ist und gemeinsam mit diesem von dem Träger 2 entfernbar ist. Die in Fig. 12 gezeigte Ausführungsform kommt bevorzugt ohne ein Blasformträgerteil 6b, wie es oben dargestellt ist, aus. In diesem Falle fungiert die Halteeinrichtung 99 auch als Blasformträgerteil. Ein Verriegelungsmechanismus zum Verriegeln der Blasformteile (nicht gezeigt) kann hier beispielsweise in die Halteeinrichtung 99 eingreifen. Die Halteeinrichtung 99 hat hier weiterhin einen versteifenden Effekt auf den Träger 2.

Fig. 13 zeigt eine weitere Ausführungsform einer Vorrichtung zum Umformen von Kunststoffvorformlingen zu Kunststoffbehältnissen. Bei dieser Ausführungsform ist das Blasformteil 4b an einem Blasformträgerteil 6b angeordnet und dieses Blasformträgerteil 6b wiederum über Bolzen 122 und 124 an dem Träger. Bei dieser Ausführungsform kann zwischen dem Blasformträgerteil ein mit einem gasförmigen Medium beaufschlagbares Druckkissen angeordnet sein. Auch bei der in Fig. 12 gezeigten Ausführungsform könnte zwischen der Halteeinrichtung 99 und dem Blasformteil 4a ein derartiges Druckkissen vorgesehen sein. Die Bolzen 122 und 124 könnten ebenfalls an dem Haltekörper 90, der bevorzugt einen kreisförmigen Querschnitt aufweist, ausgebildet sein.

### Bezugszeichenliste

- 1: Umformungsvorrichtung
- 2: Transportrad, Träger
- 2a-2c: Wände des Trägers 2
- 4a, 4b: Blasformteil
- 4c: Bodenteil der Blasform
- 5: Reckstange
- 6a, 6b: Blasformträgerteil
- 8: Blasstation
- 9: Führungskurve
- 10: Kunststoffvorformlinge
- 10a: Behältnisse
- 11: Folgeeinrichtung
- 12: Schlitten
- 13: Boden
- 14: Faltenbalg
- 17: Deckel
- 18: Wandung
- 19: bewegliche Seitenwand
- 20: Reinraum
- 21: Halterung
- 22: Zuführeinrichtung
- 23: Halteeinrichtung
- 24: Abführeinrichtung
- 25: Dichtungseinrichtung
- 26: Träger
- 27: Dichtungseinrichtung
- 28: Träger zum Tragen einer Bodenform
- 29: Haltekörper
- 30: Heizeinrichtung
- 31: Heizelemente
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- 50: Anlage
- 55: Sterilisationseinrichtung
- 62: Verriegelungsmechanismus
- 65: Öffnung
- 66: Verlängerung der Schwenkwelle
- 67: Hebel
- 68: Kurvenrolle
- 82: Schwenkwelle, Trageelement
- 90: Haltekörper
- 91: Schraubverbindungen
- 92: Öffnung
- 94: Öffnung in der Wand 2a
- 96: Öffnung in der Wand 2c
- 97: Dichtungseinrichtung
- 99: Halteeinrichtung
- 102, 104: Dichtungseinrichtungen
- 110: Trägereinrichtung
- 112: Rollen
- 115: Kanal
- 116: Dichtungseinrichtung
- 118: Träger des Bodenteil 4c
- 122, 124: Bolzen

- L: punktierte Linie
- R: radiale Richtung
- Te: Trennebene
- U: (unsterile) Umgebung
- UR: Bewegungsrichtung
- X: Achse, Richtung
- Y: Richtung
- α: Winkel

## Patentansprüche

1. Vorrichtung (1) zum Umformen von Kunststoffvorformlingen (10) zu Kunststoffbehältnissen (20) mit einem bewegbaren Träger (2), an dem eine Vielzahl von Blasstationen (8) angeordnet ist, wobei diese Blasstationen (8) jeweils Blasformträgerteile (6a, 6b) zum Halten von Blasformteilen (4a, 4b) aufweisen und wenigstens eines dieser Blasformträgerteile (6a, 6b) gegenüber dem anderen Blasformträgerteil (6b, 6a) zum Öffnen und Schließen der Blasform bewegbar ist, und wobei die Blasstationen (8) jeweils ein Trageelement (82) zum Tragen wenigstens eines Blasformträgerteils (6a, 6b) aufweisen, wobei die Vorrichtung (1) einen Reinraum (20) aufweist, innerhalb dessen die Kunststoffvorformlinge (10) zu den Kunststoffbehältnissen (20) expandierbar sind, wobei die Blasformträgerteile (6a, 6b) mit dem Trageelement (82) eine Einheit (80) ausbilden, die in ihrer Gesamtheit von dem Träger (2) demontierbar ist.

2. Vorrichtung nach Anspruch 1,
**dadurch gekennzeichnet, dass**
der bewegbare Träger (2) die Blasstationen (8) in einer vorgegebenen Transportebene bewegt und die Einheit (80) zum Zwecke der Montage an dem Träger oder der Demontage von dem Träger in einer senkrecht zu dieser Ebene stehenden Richtung (Y) bewegbar ist.

3. Vorrichtung nach wenigstens einem der vorangegangenen Ansprüche,
**dadurch gekennzeichnet, dass**
wenigstens eine Blasstation (8) und bevorzugt jede Blasstation (8) einen lösbar an dem Träger (2) angeordneten Haltekörper (90) aufweist, an dem die Einheit (80) angeordnet ist.

4. Vorrichtung nach Anspruch 3,
**dadurch gekennzeichnet, dass**
in wenigstens einem Bereich zwischen dem Haltekörper (90) und dem Träger (2) eine Dichtungseinrichtung (97) vorgesehen ist.

5. Vorrichtung nach wenigstens einem der vorangegangenen Ansprüche,
**dadurch gekennzeichnet, dass**
der Träger (2) eine umlaufende Ausnehmung aufweist, in der die Blasstationen (8) angeordnet sind.

6. Vorrichtung (1) nach wenigstens einem der vorangegangenen Ansprüche,
**dadurch gekennzeichnet, dass**
ein Blasformträgerteil (6b) starr gegenüber dem Träger (2) angeordnet ist und das andere Blasformträgerteil (6a) beweglich gegenüber dem Träger (2) angeordnet ist.

7. Vorrichtung (1) nach Anspruch 6,
**dadurch gekennzeichnet, dass**
das starr an dem Träger (2) angeordnete Blasformträgerteil (6b) zumindest teilweise radial innerhalb des beweglich angeordneten Blasformträgerteils (6a) angeordnet ist.

8. Vorrichtung (1) nach wenigstens einem der vorangegangenen Ansprüche,
**dadurch gekennzeichnet, dass**
wenigstens eine Wandung (2a, 2c) des Trägers eine Öffnung (65) aufweist, durch welche eine Blasstation hindurchführbar ist.

9. Verfahren zum Demontieren oder Montieren einer Vorrichtung (1) nach wenigstens einem der vorangegangenen Ansprüche zum Umformen von Kunststoffvorformlingen zu Kunststoffbehältnissen, wobei die Vorrichtung (1) einen bewegbaren Träger (2) aufweist, an dem eine Vielzahl von Blasstationen (8) zum Umformen von Kunststoffvorformlingen zu Kunststoffbehältnissen angeordnet ist, wobei die Blasstationen jeweils ein erstes Blasformträgerteil (6a) und ein zweites Blasformträgerteil (6b) aufweisen und wenigstens eines dieser Blasformträgerteile (6a, 6b) gegenüber dem anderen Blasformträgerteil (6b, 6a) zum Öffnen und Schließen einer Blasform während eines Arbeitsbetriebs der Vorrichtung bewegt wird, wobei die zur Demontage oder Montage der Vorrichtung die gesamte Blasstation von dem Träger (2) entfernt oder an diesem Träger (2) angeordnet wird.

## Claims

1. Device (1) for forming plastic preforms (10) into plastic containers (20) with a mobile carrier (2) on which is arranged a plurality of blowing stations (8), wherein these blowing stations (8) each comprise blow mould carrier parts (6a, 6b) to hold blow mould parts (4a, 4b) and at least one of these blow mould carrier parts (6a, 6b) is mobile in relation to the other blow mould carrier part (6b, 6a) to open and close the blow mould, and wherein the blowing stations (8) each comprise a carrier element (82) to carry at least one blow mould carrier part (6a, 6b), wherein the device (1) comprises a clean room (20) within which the plastic preforms (10) can be expanded into plastic containers (20), wherein the blow mould carrier parts (6a, 6b) with the carrier element (82) form a unit (80) which can be demounted as a whole from the carrier (2).

2. Device according to claim 1,
**characterized in that**
the mobile carrier (2) moves the blowing stations (8) in a predefined transport plane and the unit (80) is mobile in a direction (Y) perpendicular to this plane for the purpose of mounting to the carrier or demounting from the carrier.

3. Device according to at least one of the preceding claims,
**characterized in that**
at least one blowing station (8) and preferably each blowing station (8) comprises a holding body (90) which is arranged releasably on the carrier (2) and on which the unit (80) is arranged.

4. Device according to claim 3,
**characterized in that**
a sealing device (97) is provided in at least one region between the holding body (90) and the carrier (2).

5. Device according to at least one of the preceding claims,
**characterized in that**
the carrier (2) has a peripheral recess in which the blowing stations (8) are arranged.

6. Device (1) according to at least one of the preceding claims,
**characterized in that**
one blow mould carrier part (6b) is arranged rigidly in relation to the carrier (2) and the other blow mould carrier part (6a) is arranged mobile in relation to the carrier (2).

7. Device (1) according to claim 6,
**characterized in that**
the blow mould carrier part (6b) arranged rigidly on the carrier (2) is arranged at least partial radially inside the blow mould carrier part (6a) arranged mobile.

8. Device (1) according to at least one of the preceding claims,
**characterized in that**
at least one wall (2a, 2c) of the carrier comprises an opening (65) through which a blowing station can be guided.

9. Method for demounting or mounting a device (1) according to at least one of the preceding claims for forming plastic preforms into plastic containers, wherein the device (1) has a mobile carrier (2) on which is arranged a plurality of blowing stations (8) for forming plastic preforms into plastic containers, wherein the blowing stations each comprise a first blow mould carrier part (6a) and a second blow mould carrier part (6b) and at least one of these blow mould carrier parts (6a, 6b) is moved in relation to the other blow mould carrier part (6b, 6a) to open and close a blow mould during a working operation of the device, wherein for demounting or mounting of the device the entire blowing station is removed from the carrier (2) or arranged on this carrier (2).

## Revendications

1. Dispositif (1) destiné à façonner des préformes en matière plastique (10) pour en faire des contenants en matière plastique (20) avec un support (2) mobile contre lequel est agencée une pluralité de postes de soufflage (8), dans lequel ces postes de soufflage (8) présentent respectivement des pièces de support de moule de soufflage (6a, 6b) pour soutenir des pièces de moule de soufflage (4a, 4b) et au moins l'une de ces pièces de support de moule de soufflage (6a, 6b) est mobile par rapport à l'autre pièce de support de moule de soufflage (6a, 6b) pour ouvrir et fermer le moule de soufflage, et dans lequel les postes de soufflage (8) présentent respectivement un élément de support (82) pour soutenir au moins une pièce de support de moule de soufflage (6a, 6b), dans lequel le dispositif (1) présente une salle blanche (20) à l'intérieur de laquelle les préformes en matière plastique (10) sont expansibles pour en faire les contenants en matière plastique (20), dans lequel les pièces de support de moule de soufflage (6a, 6b) forment avec l'élément de support (82) une unité (80) qui est démontable dans sa totalité du support (2).

2. Dispositif selon la revendication 1,
**caractérisé en ce que**
le support (2) mobile déplace les postes de soufflage (8) dans un plan de transport prédéterminé et l'unité (80) peut être déplacée dans une direction (Y) perpendiculaire à ce plan en vue du montage contre le support ou du démontage depuis le support.

3. Dispositif selon au moins l'une des revendications précédentes,
**caractérisé en ce que**
au moins un poste de soufflage (8) et de préférence chaque poste de soufflage (8) présente, agencé de façon amovible contre le support (2), un corps de soutien (90) contre lequel l'unité (80) est agencée.

4. Dispositif selon la revendication 3,
**caractérisé en ce que**
un équipement d'étanchéité (97) est prévu dans au moins une région entre le corps de soutien (90) et le support (2).

5. Dispositif selon au moins l'une des revendications précédentes,
**caractérisé en ce que**
le support (2) présente un évidement périphérique dans lequel sont agencés les postes de soufflage (8).

6. Dispositif (1) selon au moins l'une des revendications précédentes,
**caractérisé en ce que**
une pièce de support de moule de soufflage (6b) est agencée de façon rigide par rapport au support (2) et l'autre pièce de support de moule de soufflage (6a) est agencée de façon mobile par rapport au support (2).

7. Dispositif (1) selon la revendication 6,
**caractérisé en ce que**
la pièce de support de moule de soufflage (6b) agencée de façon rigide par rapport au support (2) est agencée au moins partiellement de façon radiale à l'intérieur de la pièce de support de moule de soufflage (6a) agencée de façon mobile.

8. Dispositif (1) selon au moins l'une des revendications précédentes,
**caractérisé en ce que**
au moins une paroi (2a, 2c) du support présente une ouverture (65) à travers laquelle un poste de soufflage peut être passé.

9. Procédé de démontage ou de montage d'un dispositif (1) selon au moins l'une des revendications précédentes destiné à façonner des préformes en matière plastique pour en faire des contenants en matière plastique, dans lequel le dispositif (1) présente un support (2) mobile contre lequel est agencée une pluralité de postes de soufflage (8) pour façonner des préformes en matière plastique afin d'en faire des contenants en matière plastique, dans lequel les postes de soufflage présentent respectivement une première pièce de support de moule de soufflage (6a) et une seconde pièce de support de moule de soufflage (6b) et au moins l'une de ces pièces de support de moule de soufflage (6a, 6b) est déplacée par rapport à l'autre pièce de support de moule de soufflage (6a, 6b) pour ouvrir et fermer un moule de soufflage pendant un fonctionnement du dispositif, dans lequel la totalité du poste de soufflage se voit éloignée du support (2) ou agencée contre ce support (2) pour le démontage ou le montage du dispositif.
